Europäisches Patentamt

European Patent Office

Office européen des brevets

(19)

(11) Veröffentlichungsnummer: **0 301 419 B1**

## (12) EUROPÄISCHE PATENTSCHRIFT

(45) Veröffentlichungstag der Patentschrift: **08.07.92**

(21) Anmeldenummer: **88111801.2**

(22) Anmeldetag: **22.07.88**

(51) Int. Cl.5: **B60J 7/043**, B60R 16/02,
B62D 25/06

(54) **Verbundglasscheibe für ein Kraftfahrzeugdach.**

(30) Priorität: **29.07.87 DE 3725053**

(43) Veröffentlichungstag der Anmeldung:
**01.02.89 Patentblatt 89/05**

(45) Bekanntmachung des Hinweises auf die
Patenterteilung:
**08.07.92 Patentblatt 92/28**

(84) Benannte Vertragsstaaten:
**DE ES FR GB IT**

(56) Entgegenhaltungen:
**EP-A- 0 221 287**
**DE-A- 2 820 628**
**DE-A- 2 946 427**

**PATENT ABSTRACTS OF JAPAN vol. 9, no.
183 (M-400)(1906) 30 Juli 1985,& JP-A-60
50022 (TOYOTA JIDOSHA) 19 März 1985**

(73) Patentinhaber: **Bayerische Motoren Werke Aktiengesellschaft
Patentabteilung AJ-30 Postfach 40 02 40 Petuelring 130
W-8000 München 40(DE)**

(72) Erfinder: **Ball, Wilfried
Breslauer Strasse 24
W-8312 Dingolfing(DE)**
Erfinder: **Schüch, Siegmund
Kagerstrasse 4a
W-8000 München 80(DE)**

**Beschreibung**

Die Erfindung bezieht sich auf eine Verbundglasscheibe der im Oberbegriff des ersten Anspruchs angegebenen Art und geht aus von der gattungsbildenden DE-A-29 46 427.

Beschrieben ist darin ein aus Glas bestehendes durchsichtiges Sonnendach für Kraftfahrzeuge mit einer äußeren, mit wachsender Sonneneinstrahlung sich verdunkelnden fotometrischen Glasscheibe und einer inneren, die Strahlungswärme der Sonne absorbierenden Glasscheibe. Jene Anordnung kombiniert somit zwei verschiedene Glasscheibensorten mit unterschiedlichen Eigenschaften und macht sich dabei die vorteilhaften spezifischen Eigenschaften der einzelnen Glasscheibensorten zunutze. Desweiteren ist es beispielsweise aus der DE-A-28 20 628 bekannt, das Dach eines Kraftfahrzeuges mit Solarzellen zu versehen und somit die auf das Kraftfahrzeug einstrahlende Sonnenenergie zu nutzen. Jene Solarzellen sind dabei von einer Glasscheibe verdeckt angeordnet. Um die Solarzellen mit einem möglichst hohem Wirkungsgrad betreiben zu können, muß die letztgenannte Glasscheibe eine äußerst hohe Lichtdurchlässigkeit aufweisen, sie kann also beispielsweise aus eisenarmem Weißglas hergestellt sein.

Hat sich nun ein Konstrukteur eines Kraftfahrzeug-Daches das Ziel gesetzt, neben einer an sich bekannten Sichtöffnung im Fahrzeugdach, welche darüber hinaus im Sinne eines angenehmen Innenraumklimas bei starker Sonneneinstrahlung absorbierend wirkt, zusätzlich Solarzellen am Fahrzeugdach vorzusehen, so wird er feststellen, daß die Grundforderung an die beiden Ausführungen gegenläufig sind. Während, wie oben erläutert, die Solarzellenbeschichtung ein eisenarmes Weißglas erfordert, muß bei einem Glasdach mit Sichtfenster die Sichtöffnung beschichtet sein, um die Licht- und Energietransmission auf ein erträgliches Maß zu beschränken.

Aufgabe der Erfindung ist es daher, eine Glasscheibe für ein Kraftfahrzeug-Dach aufzuzeigen, welche die beiden oben genannten Anforderungen erfüllt, welche somit also sowohl einen wirkungsgradoptimierten Einbau von Solarzellen erlaubt, als auch eine energieabsorbierende Sichtöffnung bereitstellt.

Diese Aufgabe wird durch die kennzeichnenden Merkmale des ersten Anspruchs gelöst.

Das die Dachaußenhaut bedeckende ganzflächige Glaselement ist dazu erfindungsgemäß in zumindest zwei Teilbereiche unterteilt. In einem ersten Teilbereich, welcher das Sichtfeld darstellt, ist auf der Innenseite des ganzflächigen Glaselementes in Verbundbauweise eine partiell auf die Sichtöffnung abgestimmte zweite kleinere Glasscheibe angeordnet. In einem zweiten Teilbereich sind anstelle jener zweiten Glasscheibe Solarzellen vorgesehen. Ist nun das ganzflächige äußere Glaselement aus Weißglas gefertigt, so können die Solarzellen mit optimalem Wirkungsgrad betrieben werden. Im Bereich der Sichtöffnung hingegen absorbiert die kleinere zweite Glasscheibe einen Teil der einfallenden Sonnenenergie. Dabei kann diese Scheibe wie eine Siglatherm- oder Siglachrom-Scheibe behandelt sein, oder auch aus Grün-, Braun- oder Grauglas ausgebildet sein. Vorteilhafterweise verhindert jene Verbundbauweise mit zwischenliegender Folie, daß das Fahrzeug im Bereich der sichtöffnung bei Beschädigung des Dachglases offen wird.

Das Merkmal des zweiten Anspruchs hat den Vorteil, daß das außen liegende Glaselement einfacher handzuhaben ist. Dazu ist jenes Element aus mehreren miteinander verbundenen Einzelscheiben, welche sich beispielsweise über die einzelnen Teilbereiche erstrecken, aufgebaut.

Besonders vorteilhaft ist es, gemäß Anspruch 3 die Scheiben aus chemisch gehärtetem Dünnglas herzustellen. Hiermit läßt sich eine deutliche Gewichtseinsparung erzielen.

Im folgenden wird die vorliegende Erfindung anhand eines bevorzugten Ausführungsbeispieles näher beschrieben. Es zeigt:

Fig. 1     ein Kraftfahrzeug-Dach mit einer erfindungsgemäßen Glasscheibe,

Fig. 2     den Schnitt II/II aus Fig. 1,

Fig. 3     den Schnitt III/III aus Fig. 1.

Ein Kraftfahrzeug-Dach ist auf seiner gesamten Oberfläche mit einer Glasscheibe 1 abgedeckt, welche mehrere Teilbereiche a, b, c, aufweist. Der erste Teilbereich a ist als Sichtöffnung in den Innenraum des Kraftfahrzeuges ausgebildet, unterhalb des zweiten Teilbereiches b sind mehrere Solarzellen angeordnet, und der dritte Teilbereich c, welcher die beiden erstgenannten Teilbereiche umgibt, ist mit einem Siebdruck versehen.

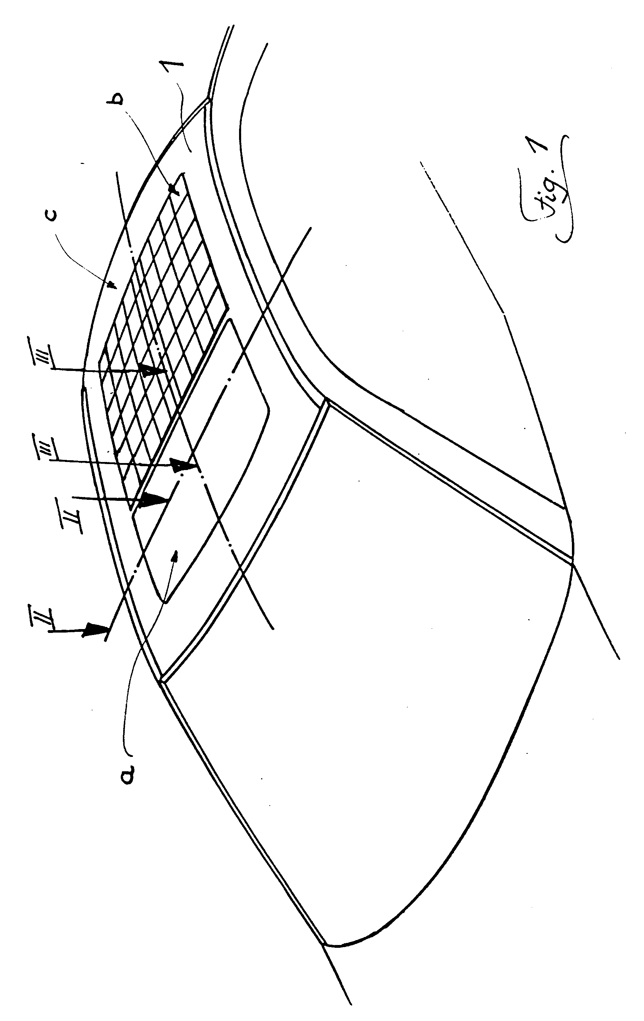

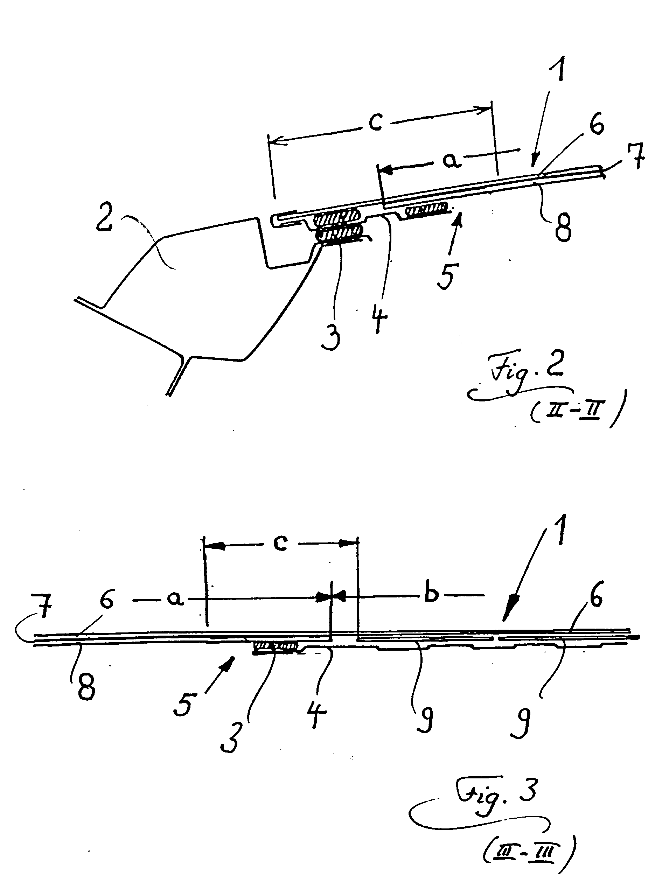

Aus den Figuren 2 und 3 ist ersichtlich, daß die Glasscheibe 1 in den verschiedenen Teilbereichen verschiedenartig ausgebildet ist. So zeigt Fig. 2 einen Schnitt durch einen Dachholm 2, auf welchen über eine Klebestelle 3 das Dachblech 4 aufgebracht ist. Auf jenes Dachblech 4, welches innerhalb des Teilbereiches a zur Erzielung einer Sichtöffnung mit einem Durchbruch 5 versehen ist, ist die Glasscheibe 1 aufgeklebt. Jene Glasscheibe 1 ist aufgebaut aus einer außenliegenden Weißglasscheibe 6, sowie einer im Teilbereich a unter Zwischenlage einer Folie 7 in Verbundbauweise angebundenen zweiten kleineren Scheibe 8. Diese ist in deren Randbereich ebenfalls mit dem Dachblech 4 verklebt. Um die Durchsicht auf das Dachblech 4 sowie die Klebestellen von außen zu verhindern, ist aus stylistischen Gründen die außenliegende Weißglasscheibe 6 im Teilbereich c mit Siebdruck versehen.

In Fig. 3 ist der Übergang vom Teilbereich a auf den Teilbereich b dargestellt. Während im Teilbereich a das Dachblech 4 wiederum den Durchbruch 5 aufweist, sind im Teilbereich b zwischen der außenliegenden Weißglasscheibe 6 sowie dem Dachblech 4 mehrere Solarzellen 9 angeordnet. Im Übergangsbereich c zwischen den beiden Teilbereichen a und b ist die außenliegende Scheibe 6 wiederum mit Siebdruck versehen.

Durch Verwendung der erfindungsgemäßen Glasscheibe ist es möglich, an einem Kraftfahrzeug-Dach sowohl Solarzellen als auch eine Sichtöffnung vorzusehen, wobei letztere energieabsorbierend ausgebildet ist.

## Patentansprüche

1. In Verbundbauweise aus zumindest zwei Scheiben mit zwischenliegender Folie aufgebaute Glasscheibe für ein Kraftfahrzeug-Dach, dadurch gekennzeichnet, daß die Glasscheibe (1) mehrere Teilbereiche aufweist, wobei sich die Verbundbauweise zwischen der außen liegenden Scheibe (6) sowie einer unterhalb dieser angeordneten kleineren zweiten Scheibe (8) nur über einen ersten Teilbereich (a) erstreckt, und daß in einem zweiten Teilbereich (b) unterhalb der außenliegenden Scheibe (6) Solarzellen (9) angeordnet sind.

2. Glasscheibe nach Anspruch 1, dadurch gekennzeichnet, daß die außenliegende Scheibe (6) aus mehreren nebeneinander angeordneten und miteinander verbundenen Einzelscheiben aufgebaut ist.

3. Glasscheibe nach Anspruch 1 oder 2, dadurch gekennzeichnet, daß die Scheiben (6, 8) aus chemisch gehärtetem Dünnglas bestehen.

## Claims

1. A glass pane built up in laminated construction style from at least two panes with interposed foil for a motor vehicle roof, characterised in that the glass pane (1) comprises a plurality of partial zones, while the laminated construction style extends between the externally-lying pane (6) and a smaller second pane (8) arranged beneath the pane (6) only over a first partial zone (a), and in that solar cells (9) are arranged in a second partial zone (b) beneath the externally-lying pane (6).

2. A glass pane according to Claim 1, characterised in that the externally-lying pane (6) is assembled from a plurality of single panes arranged side by side and connected with one another.

3. A glass pane according to Claim 1 or 2, characterised in that the panes (6, 8) are made of chemically-hardened thin glass.

## Revendications

1. Plaque pour un toit de véhicule automobile, constituée selon un mode de construction composite par deux plaques avec un film interposé, caractérisée en ce que la plaque (1) comporte plusieurs zones partielles, tandis que le mode de construction composite entre la plaque (6) placée à l'extérieur et une seconde plaque plus petite (8) disposée au-dessous de la précédente, ne s'étend que sur une première zone partielle (a), et en ce que, dans une seconde zone partielle (b), des cellules solaires (9) sont disposées au-dessous de la plaque (6) placée à l'extérieur.

2. Plaque selon la revendication 1, caractérisée en ce que la plaque (6) placée à l'extérieur, est constituée par plusieurs plaques individuelles disposées les unes à côté des autres et reliées ensemble.

3. Plaque selon la revendication 1 ou la revendication 2, caractérisée en ce que les plaques (6, 8) sont constituées de verre mince durci chimiquement.

Fig. 1

Fig. 2
(II-II)

Fig. 3
(III-III)